# EUROPEAN PATENT APPLICATION

(11) **EP 4 020 796 A1**
(43) Date of publication of application: **29.06.2022**
(21) Application number: 21217207.6
(22) Date of filing: 22.12.2021
(51) Int. Cl.: H02S 20/10, H02S 20/30, H02S 40/38

(54) **METHOD OF OPERATING A SOLAR ENERGY SYSTEM AND SOLAR ENERGY SYSTEM**

(30) Priority: 22.12.2020 NL 2027206
(71) Applicant: Stichting Duurzame Energie Texel, 1791 GC Den Burg (NL)
(72) Inventor: Schrama, Mathias, 1792 CS Oudeschild (NL); Meeldijk, Johan Jan, 1797 ST Den Hoorn (NL); Schermer, Nicolaas Johannes Wilhelmina Hendrikus, 1791 GA Den Burg (NL)
(74) Representative: van Dam, Dirkjan Bernhard

(57) **Abstract**

Method of operating a solar energy system that comprises a frame (22), an actuator (24), and a solar panel (2). The solar panel (2) includes a base and one or more photovoltaic elements. The method includes supporting, by means of the frame (22), the solar panel (2) above an inclined ground surface portion (26), in a covering position wherein the solar panel (2) substantially covers the surface portion (26). The method further includes providing the actuator (24) mechanically coupled to the solar panel (2). The method also includes moving, by means of the actuator (24), at least part of the solar panel (2) relative to at least part of the frame (22), for bringing the solar panel from the covering position to an uncovering position in which at least part of the surface portion (26) is uncovered, and/or from the uncovering position to the covering position.

## Description

### TECHNICAL FIELD

The invention relates to a method of operating a solar energy system. The invention also relates to a solar energy system.

### BACKGROUND

The use of fossil energy sources like oil, gas, and coal have been important for generating energy for a long time. However, nowadays the use of such energy sources is often regarded as problematic, due to the exhaust of combustion gasses like carbon dioxide and other emissions that may change the natural environment. Moreover, the exploration, mining and production of fossil energy sources can lead to damage to the environment. In a number of countries fossil energy sources that can be obtained relatively easily are becoming increasingly difficult to find. Thus, the environmental impact related to the use of fossil energy sources generally has increased.

Solar energy is developing as one of a number of alternatives for energy obtained from fossil energy sources. Solar panels that can be used for generation of solar energy have seen a development wherein they are produced in increasing amounts, at increasing quality and/or decreasing prices. Solar panels are nowadays popular also in regions at relatively high geographical latitude, such as a number of Western European countries like Germany and The Netherlands.

A number of countries aim for a reduction of their national use of fossil energy, and hence aim to increase the use of alternative energy sources such as solar energy. Generation of solar energy close to locations where the energy is used, moreover has the advantage that costs for energy transport can be reduced while generation and use of the solar energy can be more easily coordinated. Thus, in a number of countries there is an interest in the local generation of solar energy.

The large scale operation of solar panels however is meeting resistance in society. Covering large areas of the natural environment, such as grass fields or other fields such as moors, can go at the expense of the view that quite some people like to experience. Moreover, possibilities for agricultural use of such areas and/or a natural development of such areas may be negatively influenced as well. In particular in densely populated regions and countries, finding areas for operating solar panels is problematic. In such regions and countries, energy is used in relatively high amounts while the available area is relatively small.

WO 2005/101525 discloses a solar panel placed between the sun and a plant, which solar panel is at least partly transparent. Such transparency can be beneficial for plant growth. However, the solar panels of WO 2005/101525 are directed to use in the construction of a greenhouse. Such a greenhouse is within view, may continuously limit a natural development of a field, and moreover limits many ways of agricultural use of a field.

The invention aims to provide improved operation of a solar energy system and an improved solar energy system wherein one or more of the problems mentioned herein are at least partly met, or at least aims to provide an alternative to existing methods of operation of a solar energy system and to existing solar energy systems.

### SUMMARY

The invention provides a method of operating a solar energy system that includes a frame, an actuator, and a solar panel that includes a base and one or more photovoltaic elements that extend along the base, the method including: supporting, by means of the frame, the solar panel above a, preferably inclined, ground surface portion, in a covering position wherein the solar panel covers, or substantially covers, the surface portion. According to one aspect, the method includes: providing the actuator mechanically coupled to the solar panel and preferably to the frame; and moving, by means of the actuator, at least part of the solar panel relative to at least part of the frame, for bringing the solar panel from the covering position to an uncovering position in which at least part of the surface portion is uncovered as a result of said moving, and/or from the uncovering position to the covering position. According to a further aspect, the surface portion is defined, preferably formed, by an inclined wall of a recess, such as a ditch or trench. The recess preferably is in between a first field portion and a second field portion. Optionally, the first field portion and/or the second field portion is substantially horizontal and/or extends from the recess preferably in the horizontal direction. Preferably, the solar panel is provided, at least partly, in the recess by covering the surface portion. Preferably, a majority of the solar panel, e.g. the whole solar panel, does not project above the first or second field portion. Preferably, in the covering position, the solar panel is at least partly provided, or positioned, in the recess.

Preferably, by supporting the solar panel above the surface portion, the solar panel and the surface portion at least partly overlap when seen from the vertical direction. Preferably, in the covering position, the solar panel substantially covers the surface portion so that sunlight is hindered to reach the surface portion. Preferably, in the uncovering position, the at least part of the surface portion is uncovered so that the solar panel allows sunlight to reach the at least part of the surface portion substantially unhindered. Preferably, in the covering position, the solar panel is arranged for generating solar energy. Preferably, in the covering position, the solar panel is inclined with respect to the horizontal direction.

According to said one aspect, moving the at least part of the solar panel relative to at least part of the frame, for bringing the solar panel from the covering position to the uncovering position and/or from the uncovering position to the covering position, may enable treatment of an uncovered part of the surface portion. For example, grass growing on the surface portion may be mowed on an uncovered part of the surface portion. Other natural and/or agricultural treatments may be enabled as well. Thus, a negative influence of the solar panel on the surface portion may be reduced.

For a solar panel that is relatively close to, e.g. within 1 meter or within 0.5 meter of, a ground surface portion, so that it hinders sunlight to reach the surface portion by covering the surface portion and also is above said surface portion, a negative impact of the solar panel on growth of vegetation, such as natural plants and/or crops, on the surface portion may be significant. However, having the solar panel relatively close to said ground surface portion, can be desired to limit visibility of the solar panel for an observer. Thus, for a solar panel being relatively close to a ground surface portion, said one aspect may be especially advantageous. Said one aspect may also be applied for ground surface portions that are not inclined.

In an embodiment, the solar panel has a front surface that is arranged for receiving sunlight. Preferably, with the solar panel in the covering position, the front surface faces away from the ground surface portion. Preferably, at least 50 % or at least 60 % of the front surface of the solar panel, more preferably at least 70 %, at least 80 %, or at least 90 % of the front surface of the solar panel, overlaps with the surface portion when seen from the vertical direction. In an embodiment, an area of the ground surface portion, being covered from sunlight by the solar panel that is also above the ground surface portion, is at least 50 %, at least 60 %, at least 70 %, at least 80 %, or at least 90 % of an area of the front surface of the solar panel. Such percentages will be relatively large for a solar panel that is relatively close to the ground surface portion.

In an embodiment, the solar panel is placed within 1 meter or within 0.5 meter of, a ground surface portion on which plants or other vegetation is present. Preferably, as a result, the ground surface portion is covered by the solar panel while the solar panel is also above a majority of said ground surface portion. This may reduce visibility of the solar panel.

In an embodiment, the solar panel has a back surface that, with the solar panel in the covering position, faces the ground surface portion. Preferably, a distance between the back surface of the solar panel and the surface portion is at least 0.15 meter or at least 0.3 meter. Preferably, the distance between the back surface of the solar panel and the surface portion is measured in a direction substantially perpendicular to a plane along which the solar panel extends, e.g. coinciding with the base plane defined by the base or coinciding with the back surface. Preferably, the distance between the back surface of the solar panel and the surface portion is at most 1.5 meter, preferably at most 1 meter, more preferably at most 0.8 meter, at most 0.6 meter or at most 0.5 meter. Making the distance too large, may result in a visibility of the solar panel that is too large, so that a view of a field wherein the solar panel is operated may be disturbed.

According to said further aspect, having the solar panel, in the covering position, substantially covering an inclined surface portion that is defined, e.g. formed, by an inclined wall of a recess, such as a ditch or trench, in between a first field portion and a second field portion, may enable placement of the solar panel at least partly out of sight. Thus, a negative impact of the solar panel on a view of the natural environment may be prevented or at least reduced. Preferably, a field that includes the first field portion and/or the second field portion extends in the horizontal direction.

In an embodiment, a depth of the recess, such as the ditch or the trench, is at least 0.5 meter, preferably at least 1 meter, more preferably at least 1.5 meter, or at least 2 meter. Preferably, the depth of the recess is measured vertically between a lowest point of the recess and the lowest one of the first field portion and the second field portion at an upper end of the opposite walls of the recess. A recess having a relatively large depth may enable a relatively large part of the solar panel being out of sight, for an observer positioned, preferably in the second field portion, at a, preferably horizontal, distance, e.g. at least 50 meters, at least 100 meters or at least 500 meters, from the recess.

In an embodiment, a width of the recess is at least 2 meter, preferably at least 4 meter, more preferably at least 8 meter. Such recesses may provide space for providing solar panels of substantial size. Alternatively, or additionally, a width of the recess may e.g. be at most 40 meter, preferably at most 20 meter, more preferably at most 10 meter. A recess having a relatively small width may enable a relatively large part of the solar panel being out of sight, for an observer positioned, preferably in the second field portion, at a, preferably horizontal, distance, e.g. at least 50 meters, at least 100 meters or at least 500 meters, from the recess. Preferably, the width of the recess is defined as a horizontal distance from the lowest one of both upper ends of the opposing walls of the recess, to the other one of the opposing walls.

In an embodiment, the solar panel is provided, at least partly, in the recess so that, for an observer positioned, preferably in the second field portion, at a, preferably horizontal, distance, e.g. at least 50 meters, at least 100 meters or at least 500 meters, from the recess such as a ditch or trench, at least a lower part of the solar panel in the covering position is out of sight. Preferably, a majority, e.g. at least 75 % or 100 %, of a front surface and/or back surface of the solar panel is out of sight for said observer. Only a minority of a solar panel being visible for said observer, may already reduce a negative impact of the solar panel on a view of the natural environment. Preferably, an observation point of the observer is about 1.7 meter higher than the one of both upper ends of the opposing walls of the recess that is closest to the observation point.

Combining said one aspect and said further aspect can be especially advantageous. Walls of e.g. trenches and/or ditches may need agricultural treatment or other treatment, e.g. to maintain or improve their ecological value. Combining this with the improved view of the natural environment, may remove, or at least reduce, a major environmental objection against operating solar panels in natural environments like fields such as grass fields or moors. Thus, both advantages reinforce each other by enabling an environmentally acceptable solution, possibly unlocking the potential of solar energy on a relatively large scale in populated regions and/or countries.

Moreover, in order to promote a natural ecosystem around trenches and/or ditches in grass fields, gradually inclined walls may nowadays be preferred. Such gradually inclined walls may e.g. have an average angle of inclination with the horizontal in between a range from about 20 degrees to about 25 degrees. This development enables a rather efficient application of a method according to said further aspect. After all, such gradually inclined walls of trenches or ditches may provide a surface for placement of significant areas of solar panels covering such walls. Thus, advantages for the natural environment obtained by a method of operating a solar energy system according to said further aspect, and by modern preferences for the inclination of walls of ditches, may reinforce each other. Preferably, the recess, in particular the ditch, is used as a watercourse and/or junction canal. Preferably, the method is applied to a pre-existing recess, e.g. a recess that has existed at least one year or at least five years prior to applying the method.

With the solar panel in the uncovering position, preferably sunlight can uninterruptedly reach the uncovered at least part of the surface portion. Preferably, with the solar panel in the uncovering position, a majority of the uncovered at least part of the surface portion can be uninterruptedly reached by sunlight, i.e. without being transmitted through any objects such as the solar panel. Preferably, in the covering position, the surface portion, or at least a majority of the surface portion, is only covered by the solar panel.

Preferably, the at least part of the solar panel is moved upwards for bringing the solar panel from the covering position to the uncovering position. Preferably, the at least part of the solar panel is moved downwards for bringing the solar panel from the uncovering position to the covering position. Preferably, a solar panel end that points downwards with the solar panel in the covering position, points upwards with the solar panel in the uncovering position.

In an embodiment, the inclined surface portion extends upwards towards the first field portion, the method including, with the solar panel in the uncovering position, carrying out agricultural activities on the at least part of the surface portion and/or applying an agricultural treatment to the first field portion. In the uncovering position, the solar panel preferably forms an upwardly extending barrier between the recess, such as a trench or a ditch, on the one hand, and the field wherein the trench or ditch is located on the other hand. This may enable preventing, or at least reducing, pesticides that are used for agricultural treatment of the field to enter the recess, such as the trench or ditch.

In an embodiment, moving the at least part of the solar panel includes tilting the at least part of the solar panel, preferably includes tilting the solar panel. Optionally, moving the at least part of the solar panel includes translating the at least part of the solar panel, alternatively or additionally to tilting. Preferably, the base extends along the solar panel. In an embodiment, the base defines a base plane along the solar panel and the one or more photovoltaic elements extend along the base plane. Preferably, with the solar panel in the uncovering position, an inclination of the at least part of the solar panel, in particular of the base plane along the at least part of the solar panel, is transverse to, e.g. substantially perpendicular to, an inclination of the base plane along the at least part of the solar panel when the solar panel is in the covering position. Such embodiments enable an efficient way of uncovering the surface portion. After all, just moving the solar panel upwards by mere translational motion, may require a relatively large displacement of the whole solar panel in order to reach effective uncovering.

In an embodiment, the solar panel has two opposite ends in a direction along the solar panel that is transverse to an axis of rotation of the at least part of the solar panel when tilting the at least part of the solar panel, preferably is transverse to an axis of rotation of the solar panel when tilting the solar panel, between the covering position and the uncovering position. Preferably, the one of the opposite ends of the solar panel that is closest to the axis of rotation is highest when the solar panel is in the covering position above the inclined surface portion. Preferably, in the covering position, the axis of rotation is near, preferably at and/or substantially coinciding with, the one of the opposite ends that is highest. Preferably, with the solar panel in the covering position, a distance from the axis of rotation to the lowest one of the opposite ends of the solar panel is at least two times, preferably at least four times, more preferably at least six times, a distance from the axis of rotation to the highest of the opposite ends of the solar panel. By having the axis of rotation near the one of the opposite ends that is highest when the solar panel is in the covering position, tilting towards the uncovering position may be enabled when the solar panel is relative close to the ground surface portion in the covering position. Preferably, a counterweight is attached to the solar panel near the one of the opposite ends of the solar panel that is closest to the axis of rotation and is highest when the solar panel is in the covering position above the inclined surface portion. Preferably, the counterweight is, at least partly, formed by a battery of the actuator.

In an embodiment, the frame includes an, in use, upper frame part designed to be mechanically connected to the solar panel, and includes an, in use, lower frame part designed for providing support on the surface portion. Preferably, the actuator is mechanically coupled to the upper frame part so that the at least part of the solar panel can be moved, preferably upwards or downwards, by means of the actuator moving the upper frame part relative to the lower frame part.

In an embodiment, the lower frame part and the upper frame part are pivotably and/or slidably connected, preferably near a high solar panel part and spaced apart from the low solar panel part when the solar panel is in the covering position. Preferably, the lower frame part and the upper frame part are pivotably connected by means of a pivotable connection. Preferably, the pivotable connection is applied to connect the upper frame part to the lower frame part. Preferably, the pivotable connection is located near the high solar panel part and spaced apart from the low solar panel part, when the solar panel is in the covering position.

Preferably, with the solar panel in the covering position, a distance from the pivotable connection to a solar panel end that points downwards and is formed by the low solar panel part, is at least two times, preferably at least four times, more preferably at least six times, a distance for the pivotable connection to a solar panel end that points upwards and is formed by the high solar panel part. Preferably, with the solar panel in the covering position, a distance from the pivotable connection to lowest of the opposite ends of the solar panel is at least two times, preferably at least four times, more preferably at least six times, a distance from the pivotable connection to the highest of the opposite ends of the solar panel. In this way, the solar panel can be relatively close to the ground surface portion when the solar panel is in the covering position, while still enabling tilting to the uncovering position.

Preferably, the counterweight is attached to the solar panel near the one of the opposite ends of the solar panel that is closest to said axis of rotation, is closest to the lower frame part, is closest to the actuator, is highest when the solar panel is in the covering position above an inclined surface portion, and/or is closest to a point on the solar panel where the moveable part of the actuator is mechanically coupled to the solar panel.

In an embodiment, the inclined surface portion extends upwards towards, and preferably up to, the first field portion. Preferably, the agricultural treatment is applied from a location on or near the second field portion. Upward movement of the at least part of the solar panel that enables treatment from the second field portion, makes effective treatment of the inclined surface portion possible, in particular when the surface portion is defined by an inclined wall of a recess such as a ditch or trench.

In an embodiment, with the solar panel in the covering position, an inclination of the solar panel, in particular of the base plane along the solar panel, with respect to the horizontal direction, is similar to an inclination of the surface portion with respect to the horizontal direction. The inclination of the solar panel, in particular of the base plane of the solar panel, and the inclination of the surface portion may be regarded similar if a difference between both inclinations is at most 20 degrees, preferably at most 15 degrees, more preferably at most 10 degrees or at most 5 degrees. Preferably, in the covering position, the solar panel and the inclined surface portion are substantially parallel to each other.

In an embodiment, a smallest angle between the at least part of the solar panel in the covering position and the at least part of the solar panel in the uncovering position, is at least 50 degrees, preferably at least 65 degrees, more preferably at least 80 degrees. In particular, a smallest angle between the base plane along the at least part of the solar panel in the covering position and the base plane along the at least part of the solar panel in the uncovering position, is at least 50 degrees, preferably at least 65 degrees, more preferably at least 80 degrees.

Preferably, bringing the solar panel from the covering position to the uncovering position, or vice versa, changes an inclination of the at least part of the solar panel, in particular of the base plane along the at least part of the solar panel, at least 50 degrees, preferably at least 65 degrees, more preferably at least 80 degrees. In an embodiment, bringing the solar panel from the covering position to the uncovering position, or vice versa, changes an inclination of the at least part of the solar panel, in particular of the base plane along the at least part of the solar panel, more than 90 degrees, preferably more than 100 degrees, more preferably more than 110 degrees. Said variation of at least 50 degrees, preferably at least 65 degrees, more preferably at least 80 degrees, may allow a substantial amount of sunlight on the uncovered at least part of the ground surface portion.

In an embodiment, the method includes, with the solar panel in the uncovering position: carrying out agricultural activities on the at least part of the surface portion; and/or applying an agricultural treatment to the at least part of the surface portion. Being able to bring the solar panel from the covering position to the uncovering position, enables growing crops on the at least part of the surface portion. Thus, agricultural activities such as growing crops may be carried out on surfaces covered by the solar panel in the covering position.

Preferably, with the solar panel in the covering position, a smallest angle of the at least part of the solar panel, in particular of the base plane along the at least part of the solar panel, with the horizontal is at least 10 degrees and/or at most 40 degrees, preferably at least 15 degrees and/or at most 30 degrees. Preferably, the smallest angle between the at least part of the solar panel, in particular the base plane along the at least part of the solar panel, with the horizontal is in a range between 10 to 40 degrees, in particular between 15 to 30 degrees. Such angles may provide effective covering of inclined ground surface portions, in particular of surface portions formed by a wall of a recess such as a ditch or trench.

Preferably, with the solar panel in the uncovering position, a smallest angle of the at least part of the solar panel, in particular of the base plane along the at least part of the solar panel, with the horizontal is at least 30 degrees and/or at most 90 degrees, preferably at least 45 degrees and/or at most 90 degrees. Preferably, with the solar panel in the uncovering position, a smallest angle of the at least part of the solar panel, in particular of the base plane along the at least part of the solar panel, with the horizontal is in a range between 30 to 90 degrees, in particular between 45 to 90 degrees, e.g. 60 to 90 degrees. Such angles may enable effective treatment of inclined surface portions, in particular of surface portions formed by a wall of a recess such as a ditch or trench.

In an embodiment, the solar panel is brought to the uncovering position if the solar energy generation rate of the solar panel is below a solar energy generation rate threshold. For example, the solar panel may be brought from the covering position to the uncovering position at or around sunset, and/or may be brought from the uncovering position to the covering position at or around sunrise. Preferably, the solar panel is in the uncovering position at night and/or during cloudy periods, wherein the generated energy is below said threshold. In this way, agricultural plants and/or nature on the ground surface portion may benefit from e.g. wind and rain, preferably without a significant negative effect on energy production.

Thus, in an embodiment, the method may include determining an energy generation rate threshold and determining, e.g. monitoring, an energy generation rate of the solar panel. Preferably, the method includes moving, by means of the actuator and if the energy generation rate of the solar panel is below said threshold, the at least part of the solar panel relative to the at least part of the frame, for bringing the solar panel from the covering position to the uncovering position. Preferably, the method includes moving, by means of the actuator and if the energy generation rate of the solar panel is above said threshold, the at least part of the solar panel relative to the at least part of the frame, for bringing the solar panel from the uncovering position to the covering position. Like other embodiments, this embodiment may be applied in combination with, or apart from, said further aspect.

In an embodiment, the method may include collecting water, such as rain, that flows over an inclined solar panel, and providing the collected water to the surface portion. Thereto, the solar panel may e.g. be provided with one or more openings. Alternatively, or additionally, the solar panel may be provided with a gutter and preferably a pump for transporting the collected water from the gutter. The gutter preferably is provided near a solar panel end that points downwards with the solar panel in the covering position. Water collected by the gutter may e.g. be provided to the ground surface portion, preferably after filtering the collected water. Preferably, by means of the gutter, pesticides and/or other contamination that could be present on the solar panel, can be prevented to flow into the recess such as the trench or ditch.

In an embodiment, the method includes providing a water barrier element, preferably a water barrier screen, that extends along a longitudinal direction of the recess, wherein the water barrier element extends into the ground and is arranged for hindering flow of underground water through the water barrier element. Preferably, the water barrier element extends into the ground substantially vertically. In use, the water barrier element may form a barrier to ground water flow from or towards the recess. In an embodiment, a distance from the recess, preferably from an upper end of a wall of the recess, to the water barrier element is at least 2 meter and/or at most 4 meter, preferably about 3 meter. In an embodiment, the water barrier element includes a plurality of water barrier element parts that are preferably mutually separated and/or mutually separable.

In an embodiment, the method includes providing a water storage cutting that extends along the recess, wherein the water storage cutting is arranged for storing water. Preferably, the water storage cutting is provided with inner sides that are provided with a material, e.g. a plastic material, that is arranged to prevent leakage of stored water from the water storage cutting. Preferably, the water storage cutting is provided with a cover for limiting evaporation of the stored water from the cutting. Preferably, the water storage cutting extends along the recess in between the water barrier element and the recess. This embodiment may also be applied apart from said one aspect, for a solar energy system that does not necessarily include an actuator. Thus, there is also provided a method of operating a solar energy system that includes a frame and a solar panel that includes a base and one or more photovoltaic elements that extend along the base, the method including: supporting, by means of the frame, the solar panel above a, preferably inclined, ground surface portion, in a covering position wherein the solar panel covers, or substantially covers, the surface portion, wherein the surface portion preferably is defined by an inclined inner side of a recess, such as a ditch or trench, in between a first field portion and a second field portion, wherein the solar panel, by covering the surface portion, at least partly is provided in the recess.

In an embodiment, the method includes transporting water from the water storage, preferably to the first field portion and/or to the ground surface portion. The water storage preferably has a cross sectional area of at least 1 square meter and/or at most 3 square meter, preferably about 2 square meter. Such cross sectional areas may enable storing a significant amount of water, which can be used for water supply to the first field portion and/or the ground surface portion. The cross sectional area is preferably directed perpendicular to a direction in which the water storage and/or the recess extends.

In an embodiment, the method includes transporting water to the first field portion and/or to the ground surface portion, preferably by means of a pump arranged for irrigation and an irrigation system. Preferably, the water is transported from a water storage, such as the water storage cutting. In this way, e.g. the ground surface portion overlapping with the solar panel when seen from the vertical direction, may be supplied with water.

In an embodiment, the method includes controlling a water level in the recess. Preferably, controlling the water level is carried out by means of a pump arranged for water level control. Preferably, the controlling of the water level includes transporting, by means of the pump arranged for water level control, water from the recess to a water storage, such as the water storage cutting. Preferably, the controlling of the water level includes lowering a water level in the recess. As a result, a water level in the recess may be prevented to reach the solar panel.

Preferably, the pump is arranged for transporting the collected water from the gutter, the pump arranged for irrigation, and/or the pump arranged for water level control, are formed by one and the same pump. Preferably, the pump for transporting the collected water from the gutter, the pump arranged for irrigation, and/or the pump arranged for water level control, are powered by means of solar energy that is preferably generated by means of the solar panel.

The invention also provides a solar energy system that includes a frame, an actuator, and a solar panel that includes a base and one or more photovoltaic elements that extend along the base, the frame being arranged for supporting the solar panel above a, preferably inclined, ground surface portion. According to one aspect, the actuator is mechanically coupled to the solar panel, and preferably to the frame, for moving at least part of the solar panel relative to at least part of the frame, for bringing the solar panel from a covering position wherein the solar panel covers, or substantially covers, the surface portion, to an uncovering position in which at least part of the surface portion is uncovered as a result of said moving, and/or from the uncovering position to the covering position. Preferably, by supporting the solar panel above the surface portion, the solar panel and the surface portion at least partly overlap when seen from the vertical direction. Preferably, in the covering position, the solar panel substantially covers the surface portion so that sunlight is hindered to reach the surface portion. Preferably, in the uncovering position, the at least part of the surface portion is uncovered so that the solar panel allows sunlight to reach the at least part of the surface portion substantially unhindered. Preferably, in the covering position, the solar panel is arranged for generating solar energy. Preferably, in the covering position, the solar panel is inclined with respect to the horizontal direction.

According to a further aspect, the solar energy system is at least partly positioned in a recess such as a ditch or trench. The recess, e.g. the ditch or trench, may be located in a field, e.g. between a first field portion and a second field portion, and/or along a road or railway. The surface portion preferably is defined, e.g. formed, by an inclined wall of the recess, e.g. of the ditch or trench. Preferably the solar panel, by covering the surface portion, is provided at least partly in the recess. Preferably, a majority of the solar panel, e.g. the whole solar panel, does not project above the first or second field portion. Preferably, the solar panel is at least partly provided, or positioned, in the recess when the solar panel is in the covering position.

Combining said one aspect and said further aspect is especially advantageous, as described above in relation to a method according to the invention.

In an embodiment, the actuator is arranged for moving the at least part of the solar panel by tilting the at least part of the solar panel, preferably by tilting the solar panel, for bringing the solar panel from the covering position to the uncovering position and/or vice versa. Tilting may provide an efficient way of uncovering the surface portion. In an embodiment, the solar panel has two opposite ends in a direction along the solar panel that is transverse to an axis of rotation of the solar panel when tilting the solar panel between the covering position and the uncovering position, wherein a counterweight is attached to the solar panel near the one of the opposite ends of the solar panel that is closest to said axis of rotation and is highest when the solar panel is in the covering position above the inclined surface portion.

Preferably, the actuator includes a motor and includes a moveable actuator part that is, preferably rigidly, mechanically coupled to the solar panel, wherein the motor is arranged for moving the moveable actuator part relative to the at least part of the frame, i.e. relative to the frame or relative to a part of the frame. In an embodiment, the motor is, preferably rigidly, mechanically coupled to the frame. The actuator preferably is arranged for moving the at least part of the solar panel together with moving the moveable actuator part.

In an embodiment, the base defines a base plane along the solar panel and the one or more photovoltaic elements extend along the base plane, wherein the moveable actuator part extends, at least partly, transverse to the base plane. Preferably, the motor is provided with a rotatable toothed part and the moveable actuator part has a toothed portion that is arranged to cooperate with the rotatable toothed part of the motor.

In an embodiment, the solar panel, in particular the base of the solar panel, is at least partly transparent. In an embodiment, the solar panel, in particular the base of the solar panel, is provided with one or more openings. This may stimulate plant growth below the solar panel. After all, transparency may enable some of the incident sunlight to reach parts of the surface portion. One or more openings may enable sunlight to directly reach parts of the surface portion, while such one or more openings may also enable water, e.g. rain, to directly reach parts of the surface portion. For inclined solar panels, such one or more openings may enable collecting water that flows over the solar panel. Such stimulation may be especially advantageous in combination with a solar panel that can be brought to and from the uncovering position. Such movement provides the possibility of treatment of natural vegetation and/or agricultural plants such as crops that are, stimulated by the one or more openings and/or the transparency of the solar panel, growing on the ground surface portion that is covered by the solar panel in the covering position.

In an embodiment, the actuator includes a controller, e.g. a motor controller. The controller may be arranged for determining, e.g. monitoring, a solar energy generation rate and determining, e.g. setting, a solar energy generation rate threshold. Preferably, the controller is arranged for controlling the actuator to move, if the solar energy generation rate of the solar panel is below said threshold, the at least part of the solar panel relative to the at least part of the frame, for bringing the solar panel from the covering position to the uncovering position. Preferably, the controller is arranged for controlling the actuator to move, if the solar energy generation rate of the solar panel is above said threshold, the at least part of the solar panel relative to the at least part of the frame, for bringing the solar panel from the uncovering position to the covering position.

In an embodiment, the solar energy system is provided with a water barrier element, preferably a water barrier screen, that is arranged for hindering flow of underground water. The water barrier element may have a low water permeability, and preferably be substantially impermeable to water. Preferably, the water barrier element extends into the ground, preferably to a water barrier element depth of at least 3 meter and/or at most 10 meter, for example about 5 meter. Preferably, the water barrier element is arranged for extending into the ground, preferably substantially vertically. By means of the water barrier element, flow of underground water towards the recess may be hindered. As a result, the water barrier element may lower a water level in the recess. This may enable the use of a larger solar panel, when preventing a lower end of the solar panel (i.e., the solar panel end that points downwards with the solar panel in the covering position) to be under water in the recess. Unexpectedly, the water barrier element may also improve the supply of water to at least a part of the first field portion, as flow of ground water away from said at least part of the first field portion into the recess may be hindered by the water barrier. Thus, agricultural activities on the first field portion may benefit from the water barrier element.

In an embodiment, the solar energy system is one of a plurality of, preferably similar, solar energy systems. The method may include bringing solar panels of the plurality of solar energy systems from the covering position to the uncovering position, and/or vice versa, alternatedly. The plurality of solar panels preferably forms an array of solar panels.

In an embodiment, the solar energy system includes a plurality of solar panels, e.g. an array of solar panels, wherein the actuator preferably is arranged for collectively bringing the plurality of solar panels from the covering position to the uncovering position, and/or vice versa. Using one and the same actuator for moving a plurality of solar panels, may be cost efficient. Preferably, the plurality of solar panels are electrically and/or mechanically connected to each other. Preferably, such mechanical connections are provided by means of rigid connection structures. Preferably, the array of solar panels extends along the recess.

In an embodiment, the solar energy system includes a solar energy module that includes the solar panel, wherein the solar energy module is arranged to function as an individual and/or separable electrical unit, Preferably, the solar energy system includes a plurality of solar energy modules. Optionally, the solar panel includes a plurality of individual panels that are preferably mechanically and/or electrically connected to each other.

Preferably, the water barrier element extends along a longitudinal direction of the recess. Preferably, the recess and the water barrier screen extend in directions that are substantially parallel to each other. Preferably, the water barrier screen extends along the recess at both sides of the recess.

Preferably, the solar energy system is used in a method according to the invention. In an embodiment of a method according to the invention, a solar energy system according to the invention may be used. Features of a solar energy system described in relation to a method according to the invention, may be applied in a solar energy system according to the invention, and vice versa.

### BRIEF DESCRIPTION OF THE DRAWINGS

The invention will be illustrated with reference to the following non-limiting figures, wherein:
Figure 1 shows a solar panel in a schematic perspective view;
Figure 2A shows a schematic side view of an embodiment of a solar energy system that includes a solar panel, a frame and an actuator;
Figure 2B shows a detail of figure 2A;
Figure 3 shows a solar energy system in a variation of an embodiment illustrated with reference to figures 2A and 2B;
Figure 4A shows, in a schematic side view, a solar panel in a covering position;
Figure 4B shows, in a schematic side view, the solar panel of figure 4A in an uncovering position;
Figure 5 shows, in a schematic perspective view, two arrays of solar panels positioned in a recess;
Figure 6A shows, in an embodiment, a schematic vertical cross section of a solar energy system of an array of solar energy systems; and
Figure 6B shows a schematic top view of the array of solar energy systems of figure 6A.

### DETAILED DESCRIPTION

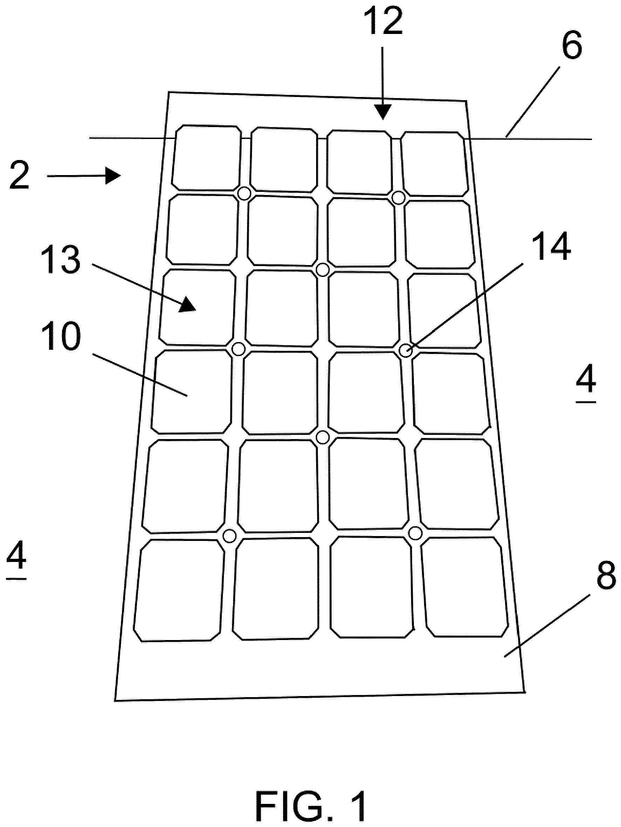

Figure 1 shows a solar panel 2, in a schematic perspective view. The solar panel is depicted against the background of a field 4, vertically limited by horizon 6 that may indicate a horizontal direction. The solar panel includes a base 8 and a plurality of photovoltaic elements 10. The base 8 may extend along the solar panel 2. The photovoltaic elements 10 extend along the base 8. The base 8 may e.g. include a front glass plate and/or a back sheet. The base 8 may be substantially planar, e.g. flat or slightly curved. Similarly, the photovoltaic elements may be planar, e.g. flat or slightly curved. The base 8 may thus define a base plane 12 that may be flat or slightly curved. The base plane 12 may be substantially parallel with or coincide with a front surface 13 of the solar panel. The front surface 13 may be formed by the front glass plate. A back surface of the solar panel may be formed by the back sheet. The base plane may generally extend along the solar panel. One or more photovoltaic elements, e.g. the plurality of photovoltaic elements 10 shown in figure 1, may extend along the base plane 12 of the base 8, e.g. in between the front glass plate and the back sheet.

The solar panel 2 is arranged for generating electricity from solar radiation. The photovoltaic elements 10 may be provided with electrodes and electrical leads that connect the photovoltaic elements to an electrical connector. The electrodes, the electrical leads, and the electrical connector are not shown in figure 1, but may be conventional as such. As a result of solar radiation, an electric potential difference can be generated at the electrical connector. The electrical connector may be used for collecting electrical energy generated by the solar panel.

The solar panel 2, in particular the base 8 of the solar panel 2, may be at least partly transparent. As a result, solar radiation falling on the solar panel may be transmitted through the solar panel to reach a surface under the solar panel. The photovoltaic elements 10 may also be at least partly transparent. Preferably, the solar panel is transparent over at least 50 %, more preferably at least 80 %, of an area of the base plane 12 that is not occupied by the photovoltaic elements 10. Preferably, the solar panel is transparent over at least 50 %, more preferably at least 80 %, of an area of the base plane 12 that is occupied by the photovoltaic elements 10. More preferably, the solar panel is transparent over at least 50 %, more preferably at least 80 %, of an area of the base plane 12.

A portion of the solar panel, and similarly a portion of the base or of a photovoltaic element, may be regarded transparent if at least 20 %, preferably at least 50 %, more preferably at least 80 %, of the normal incident visible solar radiation energy (i.e., of the energy of sunlight with a wavelength from 350 to 700 nanometer falling perpendicularly on the solar panel) is transmitted through it. Manufacturing of an example of a transparent photovoltaic element is described in patent publication US 9,728,735 B2. Transparency of the solar panel will positively influence possibilities for agricultural use and/or possibilities for a natural development, of ground surface portions that are covered by the solar panel. However, despite the transparency of the solar panel, the solar panel of figure 1 may still disturb a view of the environment wherein it is placed. This disturbance will even become stronger if a plurality of solar panels are placed together. Typically, hundreds - or even thousands - of solar panels may have to be placed together, in order to generate significant amounts of electrical energy.

The solar panel 2, in particular the base 8 of the solar panel 2, may be provided with one or more openings 14. Such openings 14 may enable water, such as rain or sprayed water, to pass through the solar panel. The possibility to bring water to plants, such as crops, by spraying may be especially useful on sunny days. After all, on such days the costs of bringing the solar panel to an uncovering position are relatively large, while plants need relatively much water. The openings 14 may be provided in the solar panel besides the photovoltaic elements 10. In particular, such openings may enable water flowing down from an inclined solar panel to be collected and provided to parts of the covered surface portion. For an inclined solar panel, relatively small openings may still be effective in distributing relatively large amounts of rain on the surface portion. Thus, one or more openings 14 may be effectively applied in inclined solar panels 2 without significantly diminishing surface area available for placing photovoltaic elements 10. An example of manufacturing of openings in a solar panel is e.g. described in patent publication US 7,982,126 B2.

In a generally applicable variation, the one or more openings may have a longitudinal shape and may extend transverse to a direction in which, in use, water driven by gravity will flow over an inclined solar panel. Alternatively, or additionally, the base 8 of the solar panel 2 may be shaped as a grid that is arranged for receiving the photovoltaic elements 10. The base may be provided with cavities for receiving electrical leads that may be electrically connected to the photovoltaic elements 10. Alongside the photovoltaic elements and the electrical leads, the base may provide for openings 14 through which, in use, water, such as rain, may pass.

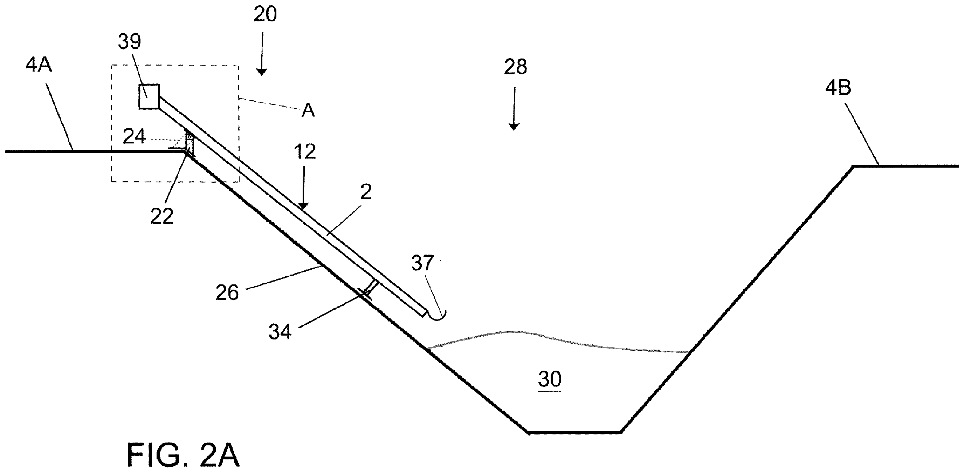

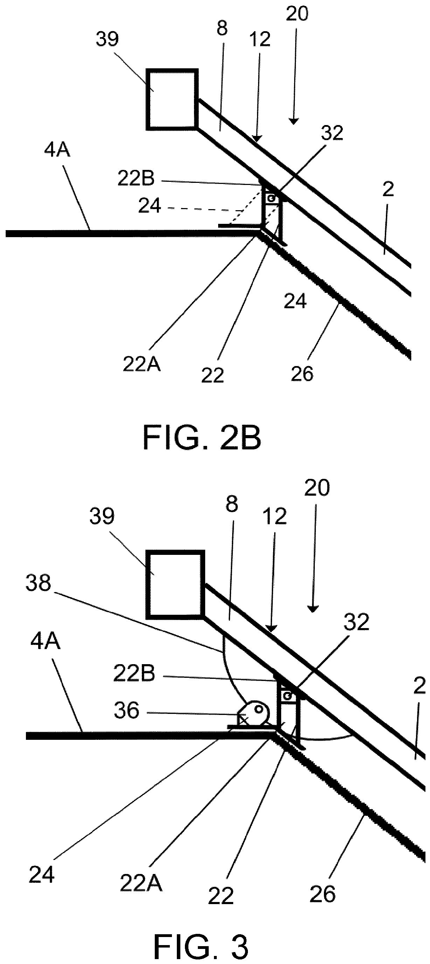

Figure 2A shows a schematic side view of a solar energy system 20 in an embodiment according to the invention. The solar energy system 20 includes a frame 22, an actuator 24, and a solar panel 2, e.g. a solar panel 2 described with reference to figure 1. Figure 2B shows a detail A of figure 2A. In use, the solar panel 2 may be supported above a ground surface portion 26, e.g. a portion of a ground surface on which grass grows. The ground surface portion may generally be formed by soil or another natural or artificial ground surface, optionally provided with vegetation such as e.g. grass or a crop. The ground surface 26 may be arranged e.g. for hydroculture. As shown in figure 2A, the surface portion 26 may be inclined with respect to the horizontal direction. An average angle of the inclined surface portion 26 with the horizontal may be at least 10 degrees and/or at most 40 degrees, in particular at least 15 degrees and/or at most 30 degrees. An angle within such ranges may correspond with an average inclination of surface portions defined, preferably formed, by a wall of a recess in the field 4, such as a wall of a ditch or trench.

The surface portion 26 may be a portion of a wall (or, in other words, an inner side) of a recess such as a ditch 28. Thus, the surface portion may be formed by an inclined wall (i.e., an inclined inner side) of the ditch. The surface portion, in particular its inclination, may be defined by the inclined wall in other ways as well. The ground surface portion may e.g. be formed by one or more artificial soil elements placed on top of the inclined wall portion. The ditch 28 may be filled with water 30. Water being present in the recess may lead to improved cooling of the solar panel 2. The ditch may be positioned in between a first field portion 4A and a second field portion 4B. The first and second field portions 4A, 4B may e.g. be portions of a grass field. It may thus be clear that a disturbance of a view of the grass field as a result of the presence of the solar panel, may be eliminated or at least may be reduced. After all, by being positioned in the ditch (or in a trench), at least a lower part of the solar panel (e.g. the whole solar panel) may be out of sight for an observer who is positioned at a distance from the ditch or trench and is looking at the field that includes the field portions 4A, 4B. An observation point, such as an eye position or a camera lens position, of the observer may, more in general, be about 1.7 meter higher than the field 4, e.g. about 1.7 meter higher than the first field portion 4A and/or second field portion 4B. The observation point may be 1.7 meter higher than the one of both upper ends of the opposing walls of the recess that is closest to the observation point.

The frame 22 is arranged for supporting the solar panel above the inclined surface portion 26. The frame 22 may include an, in use, lower frame part 22A for providing support on the surface portion 26. The frame 26 may further include an, in use, upper frame part 22B that is mechanically connected to the solar panel, in particular to the base of the solar panel. The lower frame part 22A and the upper frame part 22B may, more in general, be pivotably and/or slidably connected. Figure 2B shows a pivotable connection 32 that may be applied to connect the upper frame part to the lower frame part. As illustrated in figure 2A, one or more further panel support elements 34 may be provided to support the solar panel 2 above the surface portion 26. Such support elements may, in an embodiment, be regarded as part of the frame. Supporting the solar panel 2 above the surface portion 26 may generally imply that the solar panel and the surface portion at least partly overlap when seen from the vertical direction. Preferably at least 50 % or at least 60 % of the front surface of the solar panel, more preferably at least 70 %, at least 80 %, or at least 90 % of the front surface of the solar panel, overlaps with the surface portion when seen from the vertical direction.

Figures 2A and 2B show the solar panel in a covering position (or, in other words, a covering configuration), wherein the solar panel substantially covers the surface portion 26 of the inclined wall surface (i.e., the inclined surface of an inner side of the recess). The term "covering" may generally refer to hindering sunlight to reach the surface portion 26. Thus, an extent of the ground surface portion may be defined by the overlapping area of a shadow of sunlight caused by the solar panel and a vertical downward projection of the solar panel. Such shadow may be caused by transparent or non-transparent parts of the solar panel. An impact on plants or other vegetation of a solar panel that is both above and covering said plants or other vegetation may be significant, as it may be more difficult for both rain and sunlight to reach such plants or other vegetation. The solar panel however may be placed relative close to, e.g. within 1 meter or within 0.5 meter of, a ground surface portion on which said plants or other vegetation are present, in order to reduce visibility of the solar panel. As a result, the ground surface portion may be covered by the solar panel 2 while the solar panel 2 is also above a majority of said ground surface portion. Generally, an area of the ground surface portion, being covered from sunlight by the solar panel that is also above the ground surface portion, may e.g. be at least 50 %, at least 60 %, at least 70 %, at least 80 %, or at least 90 % of an area of a front surface (illustrated with reference number 13 in figure 1) of the solar panel.

The one or more photovoltaic elements of the solar panel 2 may extend along a base plane 12 of the base. The base plane 12 may e.g. approximately coincide with the front surface of the solar panel, on which in use the solar radiation falls. The actuator 24 may be mechanically coupled to the frame 22, e.g. to the lower frame part 22A. The actuator 24 is mechanically coupled to the solar panel 2, e.g. to the base 8 of the solar panel 2. As a result of this mechanical coupling, the actuator 24 may move at least part of the solar panel, e.g. the whole solar panel, relative to the lower part 22A of the frame. By moving the at least part of the solar panel, the solar panel may be brought from the covering position to an uncovering position (or, in other words, an uncovering configuration). In the uncovering position, at least part of the surface portion is uncovered as a result of said moving. Plants or other vegetation that are covered by a solar panel that is also above said plants or other vegetation, may especially benefit from such uncovering.

The actuator 24 may include a motor that is, preferably rigidly, mechanically coupled to the frame 22, preferably to the lower frame part 22A. The motor may e.g. be screwed to the lower frame part 22A. The actuator may include a moveable actuator part that is mechanically coupled to the solar panel, preferably to the base of the solar panel. The mechanical coupling may be rigid, so that the solar panel moves with the moveable actuator part. Alternatively, in a variation the motor may be, preferably rigidly, mechanically coupled to the solar panel, while the moveable actuator part may be, preferably rigidly, mechanically coupled to the frame, preferably to the lower frame part.

The moveable actuator part may include a rotatable driving axle that is mechanically coupled to the motor, e.g. may be formed by an elongation of a motor axle that forms a rotatable part of the motor. The moveable actuator part may thus be moveable by the motor relative to the lower frame part 22A. The driving axle may be mechanically coupled to the upper frame part 22B, at or near the pivotable connection 32. Thus, the moveable actuator part may be mechanically coupled to the solar panel via the upper frame part. By rotating the motor axle, the actuator may rotate the moveable actuator part and tilt the solar panel.

It may thus be clear that, more in general, the frame 22 may include an, in use, upper frame part 22B that is designed to be mechanically connected to the solar panel. The frame may also include an, in use, lower frame part 22A designed for providing support on an inclined surface portion. The actuator 24 may be mechanically coupled to the upper frame part 22B so that at least part of the solar panel 2 can be moved, preferably upwards or downwards, by means of the actuator moving the upper frame part 22B relative to the lower frame part 22A. The actuator may be mechanically coupled to the lower frame part and/or may have an actuator support element to support the actuator above the ground surface portion. Such a support element may, in an embodiment, be regarded as part of the frame.

The motor axle may be driven by means of a driving part of the motor, which may be an electromagnetic driving part. The motor may, more in general, be an electric motor. The motor axle may form, or be part of, a rotor of the electric motor. The electromagnetic driving part may include a battery. The actuator may include a battery controller for charging the battery. The battery, in particular the battery controller, may be electronically connected to the solar panel in order to charge the battery by means of the solar panel. The solar energy system may thus be substantially self-sustaining.

The actuator may be provided with a motor controller that includes a switch for turning on the motor, thus setting in motion the at least part of the solar panel relative to at least part of the frame. The switch may be arranged for remote control. More in general, the motor controller may be arranged for a user to control an inclination of the solar panel and/or a distance of the solar panel to the covered or at least partly uncovered surface portion. Moving the at least part of the solar panel (e.g. the whole solar panel) may be remotely controlled.

The motor controller may further be arranged for determining a solar energy generation rate, i.e. an amount of energy generated by the solar panel 2 per unit of time. Thus, the motor controller may, in use, monitor the solar energy generated by the solar panel 2, e.g. continuously or at regular time intervals. The motor controller may further be arranged for determining an energy generation rate threshold, e.g. by receiving an energy generation rate threshold value from a user or by setting a energy generation rate threshold value close above zero. Said threshold may e.g. be approximately 5 %, or 10 %, of a maximum energy generation rate monitored during a time period, e.g. a time period of four weeks. Of course, other energy generation rate thresholds are possible as well.

The motor controller may, more in general, be arranged for moving the at least part of the solar panel based on the determined (e.g. monitored) solar energy generation rate. The controller may be arranged for controlling the actuator to move, if the solar energy generation rate of the solar panel 2 is below said rate threshold, the at least part of the solar panel 2 in order to bring the solar panel from the covering position to the uncovering position. The controller may be arranged for controlling the actuator to move, if the solar energy generation rate of the solar panel 2 is above said rate threshold, the at least part of the solar panel in order to bring the solar panel from the uncovering position to the covering position. Thus, the position of the solar panel 2 may be controlled by the energy generation rate of the solar panel relative to the energy generation rate threshold. By choosing the threshold value, the amount of sunshine and/or rain provided on the uncovered ground surface portion may be balanced against the amount of energy generated by the solar panel 2.

Figure 3 shows a detail of a variation of the solar energy system illustrated with reference to figures 2A and 2B. In the variation of figure 3, the solar energy system 20 includes an actuator 24 that may include a motor 36. The actuator may include a moveable actuator part 38 that is mechanically coupled to the solar panel 2, preferably to the base 8 of the solar panel. The moveable actuator part 38 may be moveable by the motor relative to the motor. The motor may be arranged for moving the moveable actuator part relative to the lower frame part 22A of the frame 22. The moveable actuator part 38 may be curved. The moveable actuator part 38 may project out of a back surface of the solar panel 2. The moveable actuator part 38 may extend transverse to the base plane, in particular in a plane that is transverse to the base plane. The moveable actuator part may e.g. be mechanically coupled to the solar panel at two positions, as illustrated in the variation of figure 3.

The motor 36 may be provided with a rotatable toothed part. The moveable actuator part 38 may generally have an elongated shape. The moveable actuator part may have a toothed portion that is arranged to cooperate with the rotatable toothed part of the motor. The motor axle may be coupled to a driving axle of the actuator that is mechanically coupled to the toothed part. By means of said driving axle, the toothed part can be rotated to move the moveable actuator part by engaging the toothed portion.

The moveable actuator part may be flexible. Alternatively, the moveable actuator part may be rigid. The moveable actuator part may e.g. include a rigid metal and/or a flexible rubber material, in order to achieve the desired rigidity and/or flexibility. A rigid moveable actuator part may provide support to the solar panel 2. Thus, the frame 20 may lack the upper frame part 22B that is mechanically connected to the solar panel. In such a variation, the actuator may, in use, move the at least part of the solar panel relative to the whole frame. A rigid moveable actuator part 36 may however be advantageously combined with the upper frame part 22B, to provide a stronger support. In such a variation, the pivotable connection 32 may also allow sliding motion of the upper frame part relative to the lower frame part. Alternatively, or additionally, the actuator may be arranged for moving the curved moveable actuator part 36 along a circular path, while the pivotable connection 32 is located in the centre of the circle that defines said circular path.

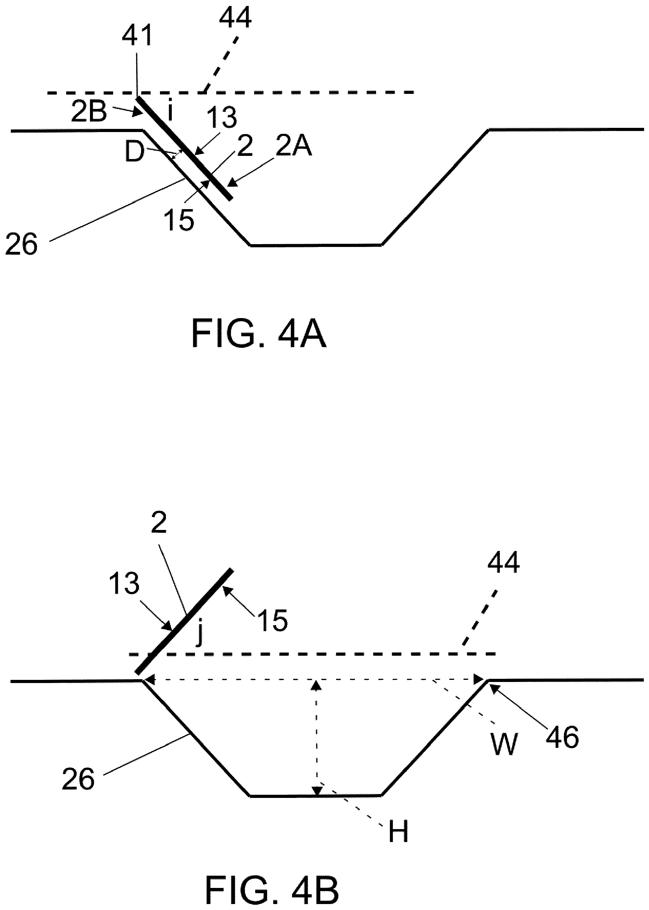

The actuator 22 may be arranged for moving at least part of the solar panel, e.g. the whole solar panel, upwards, thus bringing the solar panel from the covering position shown in figure 2A, to an uncovering position. Figure 4A schematically shows the solar panel in the covering position. Figure 4B schematically shows the solar panel 2 in the uncovering position. The solar panel 2 may have a front surface 13 arranged for receiving sunlight. With the solar panel in the covering position, the front surface 13 may face away from the ground surface portion 26. The solar panel may have a back surface 15 that, with the solar panel 2 in the covering position, may face the ground surface portion. The ground surface portion may be defined by an inclined wall 26 of a recess 28. Thus, by covering the surface portion 26, the solar panel may, at least partly, be provided in the recess 28. Preferably, the solar panel does not extend out of the recess. The recess may e.g. be a ditch or may e.g. be a trench. The recess 28 may extend in between a first field portion 4A and a second field portion 4B. Preferably, a majority of the solar panel 2, e.g. the whole solar panel 2, does not project above the first or second field portion 4A, 4B (i.e., preferably, the majority of the solar panel does not project above the first field portion 4A and/or does not project above the second field portion 4B).

In the uncovering position, at least part of the surface portion 26 is uncovered as a result of said moving of the solar panel relative to at least part of the frame. More in general, uncovering at least part of the surface portion may generally refer to the solar panel allowing sunlight to reach the at least part of the surface portion substantially unhindered. The actuator 22 may also be arranged for moving the at least part of the solar panel downwards, thus bringing the solar panel from the uncovering position to the covering position. As illustrated in figures 4A and 4B, the actuator may be arranged for moving the at least part of the solar panel by tilting the solar panel, bringing the solar panel from the covering position to the uncovering position and/or vice versa.

In the covering position, the solar panel substantially covers the inclined surface portion. A distance D between the back surface 15 of the solar panel 2 and the surface portion 26, measured in a direction substantially perpendicular to a plane along which the solar panel extends (e.g. coinciding with the base plane 12 or the back surface 15), may, e.g., be at least 0.15 meter or at least 0.3 meter. As a result, growth of grass and/or other plants such as e.g. crops below the solar panel may be possible, in particular with an at least partly transparent solar panel. Alternatively, the distance D may only be a few centimeter on average, while the solar panel supported above the ground surface portion may be in contact with high parts of the ground surface portion. Preferably the distance D is at most 1.5 meter, preferably at most 1 meter, more preferably at most 0.8 meter, at most 0.6 meter or at most 0.5 meter. Making the distance D too large, may result in a visibility of the solar panel that is too large, so that a view of a field wherein the solar panel is operated may be disturbed.

As shown in figures 2A-4A, in the covering position the surface portion is preferably only covered by the solar panel. As shown in figure 4B, in the uncovering position sunlight preferably can radiate on the uncovered part of the surface portion uninterruptedly (or, in other words, directly), without being transmitted through other objects covering the surface portion. Thus, preferably, a space between the ground surface portion and the solar panel is free from objects that cover a significant part, e.g. a majority such as more than 50 % or more than 75 %, of the uncovered part of the ground surface portion when the solar panel is in the uncovering position.

An inclination, indicated by angle i in figure 4A, of the solar panel, in particular of the base plane 12 along the solar panel, with respect to the horizontal direction 44, may be similar to the inclination of the surface portion 26 with respect to the horizontal direction. With the solar panel in the covering position, the smallest angle i of the solar panel with the horizontal 44 may be in a range between 10 to 40 degrees, in particular between 15 to 30 degrees. With the solar panel in the uncovering position, a smallest angle j (illustrated in figure 4B) of the solar panel with the horizontal 44 may be in a range between 30 to 90 degrees, in particular between 45 to 90 degrees, e.g. 60 to 90 degrees.

Preferably, bringing the solar panel from the covering position to the uncovering position, or vice versa, changes an inclination of the solar panel, in particular of the base plane along the solar panel. As illustrated in figures 4A and 4B, said change in inclination may amount to the sum of angles i and j. Preferably, said change of inclination is at least 50 degrees, preferably at least 65 degrees, more preferably at least 80 degrees. In an embodiment, bringing the solar panel from the covering position to the uncovering position, or vice versa, changes an inclination of the solar panel, in particular of the base plane along the solar panel, more than 90 degrees, preferably more than 100 degrees, more preferably more than 110 degrees. All such changes, varying from at least 50 degrees to more than 110 degrees, may result in an inclination of the base plane along the solar panel in the uncovering position being transverse to an inclination of the base plane along the solar panel in the covering position.

Preferably, with the solar panel in the covering position, the inclination i of the solar panel, in particular of the base plane 12, relative to the horizontal 44 may generally be smaller than the inclination of the surface portion 26 relative to the horizontal 44. Thus, with the solar panel in the covering position, the distance D between the solar panel and the surface portion may be larger for a low part 2A of the solar panel that is located lower, than for a high part 2B of the solar panel that is located higher (i.e. higher up the inclined surface portion). After all, in a ditch or trench, the low part 2A of the solar panel will generally be more out of sight compared to the high part 2B. In this way, a large space may be provided to natural or agricultural plants growing on the surface portion and being covered by the low part 2A of the solar panel.

Preferably, the pivotable connection 32 is located near the high solar panel part 2A and spaced apart from the low solar panel part 2B. The solar panel may be provided with a counterweight 39, shown in figures 2A and 2B, in order to facilitate tilting by means of the actuator. The counterweight 39 may be positioned near an end 41 of the solar panel, shown in figure 4A. Said solar panel end 41 may be formed by the, in use, high part 2B of the solar panel, when the solar panel is in the covering position. A solar panel end formed by the low solar panel part 2B may point downwards, with the solar panel in the covering position. The solar panel end that points downwards with the solar panel in the covering position, may point upwards with the solar panel in the uncovering position. A length direction of the solar panel 2 may be defined between the end of the solar panel at the low solar panel part 2A and the end of the panel at the high solar panel part 2B. Said length direction may be parallel with at least one side edge of the solar panel, preferably with both long side edges of the solar panel when the solar panel has a substantially rectangular shape.

More in general, as is also visible in figure 2A, the solar panel may have two opposite ends in a direction along the solar panel, which direction may be transverse to an axis of rotation of the solar panel when tilting the solar panel between the covering position and the uncovering position. The counterweight 39 may be attached to the solar panel near the one of the opposite ends of the solar panel that is closest to said axis of rotation, is closest to the lower frame part 22A, is closest to the actuator 24, is highest when the solar panel is in the covering position above an inclined surface portion, and/or is closest to a point on the solar panel where the moveable part of the actuator is mechanically coupled to the solar panel. The counterweight 39 may, at least partly, be formed by the battery of the actuator. Alternatively, or additionally, the counterweight 39 may include one or more other materials.

As illustrated in figures 2A-4B and 6A, the solar panel end 41 formed by the, in use, high part 2B of the solar panel in the covering position, may generally project above the first field portion 4A. This enables a larger downward motion of said end 41, so that the solar panel may be positioned closer to the surface portion 26.

A gutter 37, shown in figure 2A, may be generally provided near a solar panel end that points downwards with the solar panel in the covering position. By means of such a gutter, water such as rain may be collected if the solar panel is inclined with respect to the horizontal direction. By means of the gutter, pesticides and/or other contamination that may have accumulated on the solar panel, may be substantially prevented to flow into the recess. This may be beneficial for a natural environment in the recess. A hollow perforated drainage tube, or a screen provided with a mesh, may be provided in or on, and along, the gutter in order to prevent leaves and the like to block the gutter. Such a drainage tube or screen is not drawn in the figures, but may be conventional as such.

The solar energy system may include a pump for bringing (or, in other words, transporting) the collected water from the gutter to a water storage, e.g. a water storage cutting that extends along a recess in which the solar energy system is at least partly provided. The pump is not drawn but may be conventional as such. The collected water may e.g. be used for watering the ground surface portion. Thereto, the solar energy system may be provided with one or more fluidic channels, e.g. provided in and/or under the base 8 of the solar panel. The pump may be arranged for pumping the water collected by means of the gutter, through the fluidic channels, thus providing water to the ground surface portion. The pump may be electrically connected to one or more photovoltaic elements of the solar panel and/or to the battery of the solar energy system, so that the pump can be powered autonomously. Preferably, a plurality of solar panels may be provided with a gutter. The gutters of the plurality of solar panels may be connected to each other. The plurality of solar panels may form an array of solar panels.

Figures 4A and 4B show moving, by means of the actuator, the solar panel relative to at least part of the frame, for bringing the solar panel from the covering position to an uncovering position. In a variation, a method in an embodiment of the invention may include moving, by means of the actuator, a part of the solar panel relative to at least part of the frame, for bringing the solar panel from the covering position to an uncovering position. Thereto, the base of the solar panel may include at least two parts that may be moveable, preferably pivotable, with respect to each other. Thus, the base of the solar panel may include a pivotable mechanical coupling for moving one part of the solar panel relative to another part of the solar panel. The base plane extending along both base parts may be inflected, i.e. may have two portions that are oriented transverse to each other, when the solar panel is in the uncovering position. This may occur e.g. if the solar panel has at least two parts and a part of the solar panel is moved relative to another part of the solar panel.

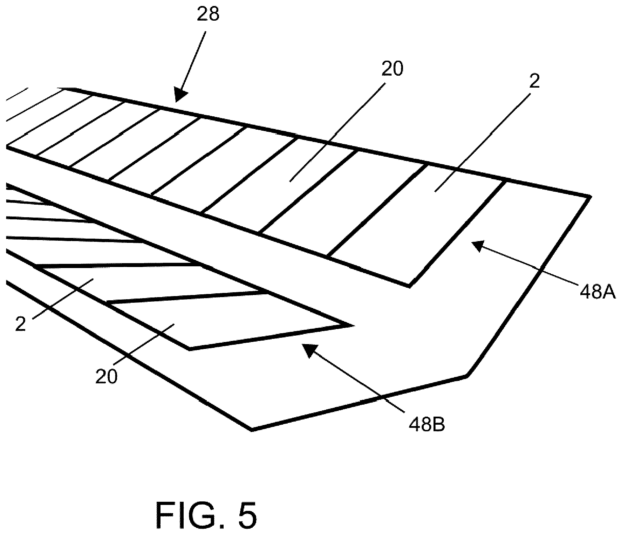

Figure 5 shows, in a schematic perspective view, two arrays 48A, 48B of the solar panels 2 of solar energy systems 20, placed and operated in a trench 28 with inclined walls (or, in other words, inclined inner sides) with respect to the horizontal. Inclined surface portions of both opposing walls of the trench may be covered. Thus, more in general, the solar panels of the solar energy systems 20 may be provided in an array along a trench or ditch. A solar energy system 20, e.g. a solar energy system 20 described with reference to figures 2-4, may generally be one of an array of, preferably similar, solar energy systems.

Providing such an array of solar energy systems 20 provides the possibility to bring a number, e.g. at most 10 % or at most 20 %, of the solar panels 2 of the solar energy systems 20 in the uncovering position, while a remainder of the solar panels 2 of the array are in the covering position. This may enable providing sunlight and/or a treatment to a number of ground surface portions, while still generating significant amounts of energy with only a limited disturbance of a view of the environment. Preferably, the solar panels of the array may be brought from the covering position to the uncovering position alternately. This may enable consecutively providing direct sunlight to at least parts of all ground surface portions covered by the array.

Preferably, two arrays of the solar energy systems 20 may be provided and operated, at opposite walls of the trench or ditch, or of another recess in a field. Such a double array of solar energy systems may be especially useful in a trench or ditch that extends transverse to the east-west direction. Thus, a longitudinal direction of a recess such as a trench or ditch may be transverse to the east-west direction. For such trenches and ditches, both walls may receive significant amounts of sunlight.

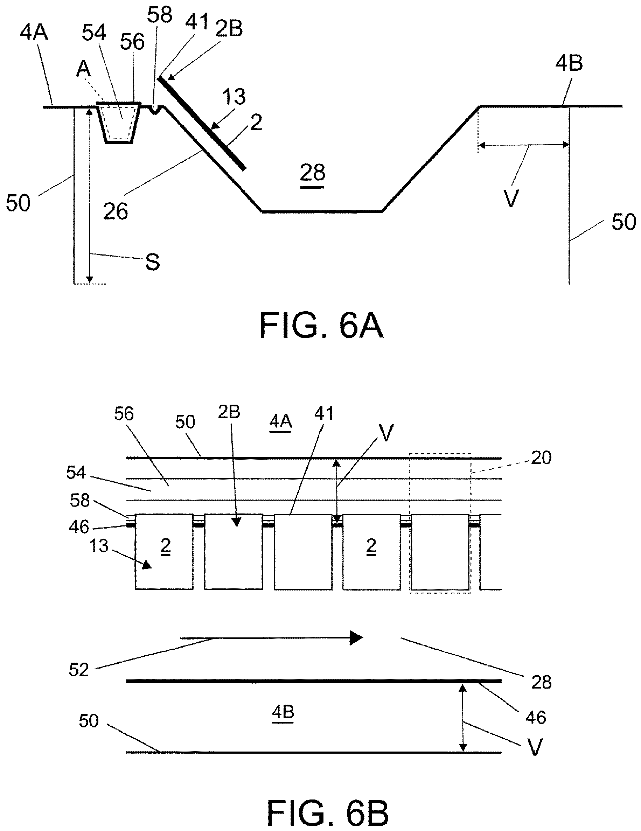

Figures 6A and 6B schematically show, in an embodiment, an array of solar energy systems 20 provided with a water barrier element, in this embodiment a water barrier screen 50. Figure 6A shows a schematic vertical cross section of a solar energy system 20 of the array. Figure 6B shows a schematic top view of the array of solar energy systems 20. The water barrier screen 50 is arranged for hindering flow of underground water through the water barrier screen. The water barrier screen 50 may be water resistant. The water barrier screen 50 may e.g. comprise a plastic material and/or a rubber material. The water barrier screen may have a low water permeability, and preferably be substantially impermeable to water.

The water barrier screen 50 may extend along the longitudinal direction 52 of the recess 28. Thus, the recess and the water barrier screen may extend in directions that are substantially parallel to each other, e.g. may be substantially the same. The water barrier screen 50 may extend into the ground, preferably to a water barrier element depth S of at least 3 meter and/or at most 10 meter, for example about 5 meter. The water barrier screen 50 may extend into the ground substantially vertically. The screen may be placed in a trench that is made by means of, e.g., a hydraulic trencher.

Preferably, the water barrier screen extends along the recess at both sides of the recess. A distance V from the recess 28, in particular from an upper end 46 of a wall of the recess 28, to the water barrier screen 50 may be at least 2 meter and/or at most 4 meter, preferably about 3 meter. The water barrier screen 50 may comprise at least two, possibly mutually separate, water barrier screen parts. The at least two water barrier screen parts may extend along opposite sides of the recess. Figures 6A and 6B show, as an example, two parts of the water barrier screen 50. The recess may 28 be in between the at least two water barrier screen parts.

By means of the water barrier screen 50, flow of underground water towards the recess 28 may be hindered. As a result, a water level in the recess 28 may be lower. The water barrier screen may hinder replenishment of water that evaporates from the recess. This may enable the use of a larger solar panel 2, when preventing a lower end of the solar panel (i.e., the solar panel end that points downwards with the solar panel in the covering position) to be under water in the recess 28. Unexpectedly, the water barrier screen 50 may also improve the supply of water to a part of the first field portion 4A, as flow of ground water away from said part of the first portion 4A into the recess may be hindered by the water barrier screen 50. Thus, agricultural activities on the first field portion 4A may benefit from the water barrier screen 50.

The solar energy system 20 described with reference to figures 6A and 6B, may be used in an embodiment of a method according to the invention. The method may include providing a water storage, such as a water storage cutting 54 that extends along the recess 28 and is arranged for storing water therein. Preferably, the water storage cutting 54 is provided with a cover 56 for limiting evaporation of the stored water from the water storage cutting. Preferably, the water storage cutting 54 extends along the recess 28 in between the water barrier screen 50 and the recess 28.

The water storage cutting 54 preferably has a cross sectional area A of at least 1 square meter and/or at most 3 square meter, preferably about 2 square meter or about 1.5 square meter (i.e., about one and a half square meter). Such cross sectional area's may enable storing a significant amount of water, which can be used for water supply to the first field portion and/or the ground surface portion. The cross sectional area may be directed perpendicular to a direction in which the water storage cutting and/or the recess extends, e.g. may be perpendicular to the longitudinal direction 52 of the recess 28.

The method may include transporting water from the water storage, preferably to the first field portion and/or to the ground surface portion. The method may thus, more in general, include transporting water to the first field portion and/or to the ground surface portion, preferably by means of a pump arranged for irrigation and an irrigation system (the pump arranged for irrigation and the irrigation system are not drawn in figures 6A and 6B, but may be conventional as such).

The method may further include controlling a water level in the recess. Controlling the water level may be carried out by means of a pump arranged for water level control (the pump for water level control is not drawn in figures 6A and 6B, but may be conventional as such). Thus, the pump arranged for water level control may be included by the solar energy system 20, or by a plurality of solar energy systems such as an array of solar energy systems. The controlling of the water level may include transporting, by means of the pump arranged for water level control, water from the recess to the water storage, such as the water storage cutting 54. The controlling of the water level may include lowering a water level in the recess. As a result, a water level in the recess may be prevented to reach a lower end of the solar panel (i.e., the solar panel end formed by a low part of the solar panel) when the solar panel is in the covering position.

The pump that may be used for pumping the water collected by means of the gutter, may form the pump arranged for water level control and the pump arranged for irrigation. More in general, one and the same pump may be used as pump arranged for water level control and pump for irrigation, and preferably also as the pump arranged for pumping the water collected by means of the gutter. Preferably, the one and the same pump is powered by means of solar energy that is preferably generated by means of the solar panel.

The controlling may include pumping of water from the recess into the water storage cutting 54. More in general, controlling the water level may include lowering a water level in the recess. As a result, a water level in the recess may be prevented to reach the solar panel 2, or another solar panel 2 that is one of a plurality of solar panels. Controlling the water level may further include pumping water from the water storage cutting towards the ground surface portion. As a result, the ground surface portion covered by the solar panel and/or overlapping with the solar panel when seen from the vertical direction, may be irrigated.

In a generally applicable embodiment, a method according to the invention may include providing a movement space cutting 58 that is arranged for receiving, with the solar panel 2 in the uncovering position, an end 41 of the solar panel that is formed by a high part 2B of the solar panel 2 when the solar panel is in the covering position. Additionally, or alternatively, the movement space cutting 58 may be arranged for receiving a counterweight that is provided near, in particular at, an end 41 of the solar panel of the solar panel that is formed by a high part 2B of the solar panel 2 when the solar panel is in the covering position. The movement space cutting 58 may enable a larger downward motion of said end 41, so that the solar panel 2 may be positioned closer to the surface portion 26. The movement space cutting 58 may extend along the recess 28. The cutting 58 may be positioned in between the water storage cutting 54 and the recess 28.

A solar energy system, or one or more arrays thereof, illustrated with reference to figures 1-6, may be used in an embodiment of a method according to the invention. The method may include operating the solar energy system 20 that includes the frame 22, the actuator 24, and the solar panel 2 that includes the base 8 and one or more photovoltaic elements 10 that extend along the base 8. The method may include supporting, by means of the frame, the solar panel above a, preferably inclined, surface portion 26. In such a covering position, the solar panel substantially covers the surface portion from direct sunlight. The method may include operating an array of the solar energy systems 20, preferably two arrays that are provided at opposite walls of a trench or ditch. The method may include bringing solar panels of the array from the covering position to the uncovering position, and/or vice versa, alternatedly.

The method may further include providing the actuator mechanically coupled to the solar panel 2. As illustrated with reference to figures 2B and 3, the moveable actuator part of the actuator may be attached to the solar panel 2. The mechanical coupling, or attachment, may be realised e.g. by means of welding, by screws, and/or by other connection means. By means of the actuator, at least part of the solar panel may be moved relative to at least part of the frame, at least partly upwards from the covering position to the uncovering position, or at least partly downwards from the uncovering position to the covering position.

As illustrated in figures 4A and 4B, moving the at least part of the solar panel may include tilting the at least part of the solar panel. Preferably, the whole solar panel is moved, said movement including tilting. As a result of such tilting, with the solar panel in the uncovering position, an inclination of the base plane 12 defined by the base 8 may be transverse to an inclination of the base plane when the solar panel is in the covering position. The one or more photovoltaic elements 10 may extend along the base plane.

By moving the at least part of the solar panel to bring the solar panel in the uncovering position, at least part of the inclined surface portion is uncovered. In an embodiment, the method may include, with the solar panel in the uncovering position, applying an agricultural treatment. The possibility of applying such agricultural treatment may enable carrying out agricultural activities on the surface portion. The inclined surface portion extends upwards towards, and preferably up to, the first field portion. The method may include, with the solar panel in the uncovering position, applying the agricultural treatment to the first field portion 4A (see figure 2A).

It may thus be clear that, more in general, a solar energy system is provided wherein the solar panel can be moved, preferably tilted, at least partly up and down. Preferably, the solar energy system is not part of a greenhouse structure. Contrary to many greenhouses, the solar energy system may allow outdoor air to flow along the surface portion. Contrary to a greenhouse, a temperature on the surface portion may be non-regulated and/or may be similar to an outdoor temperature. The solar energy system may enable generating electrical energy while reducing a negative effect on the natural environment and/or on agriculture. For example, plant growth may be stimulated by making the base of the solar panel at least partly transparent. As a result, solar radiation may reach, through the solar panel, plants growing on a ground surface portion that is covered by the solar panel in the covering position.

In a generally applicable embodiment, one or more light-emitting diodes (also referred to as LEDs) may be provided in and/or under a base of a solar panel (LEDs are not drawn, but may be conventional as such). E.g., a back surface (illustrated with reference number 15 in figures 4A and 4B) of the solar energy panel may be provided with a plurality of LEDs. The one or more LEDs may be electrically connected to one or more photovoltaic elements of the solar panel and/or to the battery of the solar energy system, so that the one or more LEDs can be powered autonomously. The LED, or the plurality of LEDs, may be positioned to provide light to vegetation, such as natural plants, or crops (or other agricultural vegetation like grass), growing on a ground surface portion covered by the solar panel.

Moving at least part of the solar panel upwards further enables agricultural and/or natural treatment of surface portions otherwise covered by the solar panel. For example, walls of ditches on which solar panels are placed, can, at least partly, still be maintained and treated. Surprisingly, with at least part of the solar panel tilted upwards, the solar panel may form an effective barrier to sprayed pesticides. Thus, with the solar panel in the uncovering position, a field portion may be treated with pesticides while contamination of water present in the ditch is reduced by means of the solar panel. Such effect may be increasingly effective when an array of solar panels is used, preferably two arrays at opposite sides of a recess such as the ditch or trench. Preferably, by means of a water barrier element (for example a water barrier screen illustrated with reference to figures 6A and 6B) that extends along the recess such as the ditch or trench, transport of pesticides by flow of groundwater towards the recess may further be hindered.

For an observer positioned at a distance, e.g. at least 50 meters, at least 100 meters or at least 500 meters, from a recess such as a ditch or trench, at least a lower part of the solar panel in the covering position may be out of sight. Preferably, a majority, e.g. at least 75 % or 100 %, of a front surface and/or back surface of the solar panel may be out of sight for said observer that is at a distance from the recess. Only a minority of a solar panel being visible for said observer, may already reduce a negative impact of the solar panel on a view of the natural environment.

There is also provided a solar energy system that includes a frame, an actuator, and a solar panel that includes a base and one or more photovoltaic elements that extend along the base, the frame being arranged for supporting the solar panel above a, preferably inclined, surface portion, the frame including an, in use, upper frame part designed to be mechanically connected to the solar panel, and including an, in use, lower frame part designed for providing support on the surface portion. The actuator may be mechanically coupled to the upper frame part so that at least part of the solar panel can be moved, preferably upwards or downwards, by means of the actuator moving the upper frame part relative to the lower frame part. Such a solar energy system may be combined with one or more aspects, embodiments, features, and/or examples of the present disclosure. E.g., the moveable actuator part may be mechanically coupled to solar panel via a mechanical coupling of the moveable actuator part to the upper frame part.

The term "ditch" used herein may be interpreted broadly, and may include different kinds of recesses, dry or partly filled with water, such as canals, streams, rivers etc. Similarly, the term "trench" may be interpreted broadly, and may include different kinds of recesses such as cuttings or excavations in a field. The term "field" may be interpreted broadly, and may include a moor, grass land, and/or other natural or agricultural fields. The term "wall" of a recess used herein, may be interpreted as an inner side of the recess. Angles referred to herein are defined in a 2-dimensional plane that may be vertical, may be perpendicular to an axis of rotation of the solar panel when tilting the solar panel between the covering position and the uncovering position, may be parallel with a length direction of the solar panel and/or may be perpendicular to a longitudinal direction of a recess such as a trench or ditch. Reference to at least part of a method step or object, such as at least part of the solar panel, also refers to the whole method step or object, such as the whole solar panel.

A depth of a recess such as the ditch or the trench may generally be e.g. at least 0.5 meter, preferably at least 1 meter, more preferably at least 1.5 meter, or at least 2 meter. The depth H, illustrated in figure 4B, may be measured vertically between a lowest point of the recess (which may be under water, as illustrated in figure 2A, or may be dry, as illustrated in figure 5) and the lowest one of the field portions 4A, 4B at an upper end 46 of the opposite walls of the recess. A width W of the recess, illustrated in figure 4B, may be defined as a horizontal distance from the lowest one of both upper ends of the opposing walls of the recess, to the other one of the opposing walls. The width W of the recess may e.g. be at least 2 meter, preferably at least 4 meter, more preferably at least 8 meter. Such recesses may provide space for providing solar panels of substantial size. Alternatively, or additionally, a width of the recess may e.g. be at most 40 meter, preferably at most 20 meter, more preferably at most 10 meter. In recesses of limited width, a relatively large part of the solar panel could be out of sight for an observer who is at a distance from the recess.

The term solar panel as used herein, may refer to an individual panel (as e.g. shown in figure 1) or to a plurality of individual panels that are grouped together. Such a plurality of individual panels e.g. may be included by a solar energy system as described herein. The solar energy system may further include electronic elements and/or mechanical structures, to electronically and/or mechanically connect individual panels included by the solar energy system to each other. The plurality of individual panels that are grouped together may for example be included by a solar energy module. The solar energy module may be arranged to function as an individual unit for generation of solar energy. The solar energy module may be mechanically and/or electrically separable from other solar energy modules. A solar energy system as described herein, may thus optionally include one or more solar energy modules, e.g. a plurality of solar energy modules.

More in general, the plurality of individual panels may be grouped together mechanically and/or electronically. The plurality of individual panels of a group, or of a complete solar energy system, may be mechanically and/or electronically connected with each other. An individual panel may have a rectangular shape, for example a solar panel length of 2 meter and a solar panel width of 1 meter. Individual panels may for example be grouped into groups of six individual panels. A group of individual panels may for example be formed by six neighbouring individual panels of an array of individual panels, preferably being included by a solar energy module that may be about six meter wide. A solar energy module may for example include at least six individual panels. A group of solar energy modules, optionally included by one and the same solar energy system, may be moved collectively from the covering position to the uncovering position, and/or vice versa. Such moving may be carried out by one and the same actuator.

Features disclosed in relation to one or more of the embodiments described herein, may be applied in other embodiments as well. The invention is not limited to an aspect, embodiment, feature, or example of the present disclosure. Movement of the at least part of the solar panel relative to at least part of the frame may include translating and/or rotating the at least part of the solar panel, e.g. in a direction, or plane, that extends substantially along a direction wherein the solar panel, in particular the base plane, extends. An aspect, embodiment, example or feature of the present disclosure that is not inherently linked to an inclined surface portion, may also be applied to a substantially horizontal surface portion.

Solar panels disclosed herein may be applied and/or provided independent from a solar energy system disclosed herein and/or independent from a method of operating a solar energy system disclosed herein. For example, the present disclosure provides a solar panel provided with one or more openings, a gutter, a light-emitting diode, and/or a pump for pumping water from the gutter. In an embodiment, the solar panel may include a base that is shaped as a grid and/or may be provided with one or more fluidic channels. The fluidic channels may be in fluid connection with the gutter. Although each of figures 2A-6 only shows one recess, the invention may be applied in a plurality of recesses in one and the same field. A plurality of solar panel arrays may be positioned in a plurality of recesses. The recesses may extend substantially parallel to each other and/or may be distributed along the field. A method according to the invention may include operating a plurality of arrays of the solar energy systems 20 that are provided at walls of a plurality of recesses.

All kinematic inversions are considered to be inherently disclosed and to be within the scope of the present disclosure. The use of expressions like "preferably", "more preferably", "in particular", "especially", "such as", "e.g.", "for example", "may", "can", "embodiment", "variation", "aspect" etc. is not intended to limit the invention. The indefinite article "a" or "an" does not exclude a plurality.

## Claims

1. Method of operating a solar energy system that includes a frame, an actuator, and a solar panel that includes a base and one or more photovoltaic elements that extend along the base, the method including:
- supporting, by means of the frame, the solar panel above an inclined ground surface portion so that the solar panel and the surface portion at least partly overlap when seen from the vertical direction, in a covering position wherein the solar panel substantially covers the surface portion so that sunlight is hindered to reach the surface portion;
- providing the actuator mechanically coupled to the solar panel; and
- moving, by means of the actuator, at least part of the solar panel relative to at least part of the frame, for bringing the solar panel from the covering position to an uncovering position in which at least part of the surface portion is uncovered as a result of said moving so that the solar panel allows sunlight to reach the at least part of the surface portion substantially unhindered, and/or from the uncovering position to the covering position.

2. Method according to claim 1, wherein the surface portion is defined by an inclined wall of a recess, such as a ditch or trench, in between a first field portion and a second field portion, wherein the solar panel, by covering the surface portion, at least partly is provided in the recess.

3. Method according to claim 2, wherein the inclined surface portion extends upwards to the first field portion, the method including, with the solar panel in the uncovering position, applying an agricultural treatment to the first field portion.

4. Method according to claim 2 or 3, wherein a width of the recess is at most 40 meter, preferably at most 20 meter, more preferably at most 10 meter, and/or a depth of the recess is at least 0.5 meter, preferably at least 1 meter, more preferably at least 1.5 meter, or at least 2 meter.

5. Method according to one of claims 2-4, wherein moving the at least part of the solar panel includes tilting the at least part of the solar panel, wherein the solar panel has two opposite ends in a direction along the solar panel that is transverse to an axis of rotation of the solar panel when tilting the solar panel between the covering position and the uncovering position, wherein a counterweight is attached to the solar panel near the one of the opposite ends of the solar panel that is closest to said axis of rotation and is highest when the solar panel is in the covering position above the inclined surface portion.

6. Method according to one of claims 1-5, wherein, with the solar panel in the covering position, an inclination of the solar panel with respect to the horizontal direction, is similar to an inclination of the surface portion with respect to the horizontal direction.

7. Method according to one of claims 1-6, wherein the base defines a base plane along the solar panel and the one or more photovoltaic elements extend along the base plane, wherein, with the solar panel in the uncovering position, an inclination of the base plane along the at least part of the solar panel is transverse to an inclination of the base plane along the at least part of the solar panel when the solar panel is in the covering position, wherein bringing the solar panel from the covering position to the uncovering position, or vice versa, changes an inclination of the base plane along the at least part of the solar panel at least 50 degrees, preferably at least 65 degrees, more preferably at least 80 degrees.

8. Method according to one of claims 1-7, including, with the solar panel in the uncovering position:
- carrying out agricultural activities on the at least part of the surface portion; and/or
- applying an agricultural treatment to the at least part of the surface portion.

9. Method according to one of claims 1-8, wherein, with the solar panel in the covering position, a smallest angle of the solar panel with the horizontal is at least 10 degrees and/or at most 40 degrees, preferably at least 15 degrees and/or at most 30 degrees.

10. Solar energy system that includes a frame, an actuator, and a solar panel that includes a base and one or more photovoltaic elements that extend along the base, the frame being arranged for supporting the solar panel above an inclined ground surface portion so that the solar panel and the surface portion at least partly overlap when seen from the vertical direction, wherein the actuator is mechanically coupled to the solar panel for moving at least part of the solar panel relative to at least part of the frame, for bringing the solar panel from a covering position wherein the solar panel substantially covers the surface portion so that sunlight is hindered to reach the surface portion, to an uncovering position in which at least part of the surface portion is uncovered as a result of said moving so that the solar panel allows sunlight to reach the at least part of the surface portion substantially unhindered, and/or from the uncovering position to the covering position.

11. Solar energy system according to claim 10, wherein the solar panel, by covering the surface portion in the covering position, is at least partly positioned in a recess in a field in between a first field portion and a second field portion, wherein the inclined surface is defined by an inclined wall of the recess.

12. Solar energy system according to claim 10 or 11, wherein the actuator is arranged for moving the at least part of the solar panel by tilting the at least part of the solar panel, for bringing the solar panel from the covering position to the uncovering position and/or vice versa, wherein the solar panel has two opposite ends in a direction along the solar panel that is transverse to an axis of rotation of the solar panel when tilting the solar panel between the covering position and the uncovering position, wherein a counterweight is attached to the solar panel near the one of the opposite ends of the solar panel that is closest to said axis of rotation and is highest when the solar panel is in the covering position above the inclined surface portion.

13. Solar energy system according to one of claims 10-12, wherein the actuator includes a motor and a moveable actuator part that is mechanically coupled to the solar panel, wherein the motor is arranged for moving the moveable actuator part relative to the at least part of the frame.

14. Solar energy system according to one of claims 10-13, wherein the solar panel is at least partly transparent and/or is provided with one or more openings.

15. Method according to one of claims 1-9 using a solar energy system according to one of claims 10-14.
